(19) Europäisches Patentamt
European Patent Office
Office européen des brevets

(11) **EP 1 845 342 B1**

(12) **FASCICULE DE BREVET EUROPEEN**

(45) Date de publication et mention de la délivrance du brevet:
**06.04.2016 Bulletin 2016/14**

(51) Int Cl.:
**G01D 5/14** *(2006.01)*       **G01D 3/028** *(2006.01)*
**B60Q 1/12** *(2006.01)*

(21) Numéro de dépôt: **07290429.5**

(22) Date de dépôt: **06.04.2007**

(54) **Procédé de détermination de la position angulaire d'un projecteur au moyen de plusieurs moyens de mesure d'un champ magnétique.**

Verfahren zur Bestimmung der Winkelposition eines Scheinwerfers mittels mehrerer Messmittel eines Magnetfeldes.

Method of determining the angular position of a projector using several means for measuring a magnetic field.

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **12.04.2006 FR 0603221**

(43) Date de publication de la demande:
**17.10.2007 Bulletin 2007/42**

(73) Titulaire: **VALEO VISION**
**93000 Bobigny (FR)**

(72) Inventeurs:
• **Flandre, Loic**
**94100 Saint Maur Des Fosses (FR)**
• **Letoumelin, Rémy**
**77700 Chessy (FR)**
• **Uhrich, Arnaud**
**75015 Paris (FR)**

(56) Documents cités:
**EP-A- 0 856 720       EP-A- 1 481 846**
**US-A- 4 622 644       US-A1- 2004 207 392**

**Description**

L'invention concerne un procédé de détermination de la position angulaire instantanée d'un projecteur, notamment de véhicule automobile, qui est monté pivotant autour d'un axe de rotation dans un intervalle de débattement prédéterminé.

L'invention concerne plus particulièrement un procédé de détermination de la position angulaire instantanée d'un projecteur, notamment de véhicule automobile, qui est monté pivotant autour d'un axe de rotation dans un intervalle prédéterminé de débattement délimité par deux positions angulaires extrêmes, au moyen d'un dispositif de mesure qui comporte :

- au moins un élément ferromagnétique qui émet un champ magnétique qui est défini en tout point de l'espace par une direction et une intensité,
- au moins des premiers moyens de mesure qui sont susceptibles d'émettre un premier signal électrique de mesure qui est représentatif de l'intensité du champ magnétique local en projection sur un premier axe, l'élément ferromagnétique étant monté pivotant par rapport aux premiers moyens de mesure autour d'un axe de pivotement entre deux positions angulaires extrêmes correspondant respectivement aux positions angulaires extrêmes du projecteur ;
- une unité électronique de traitement ;

le procédé comportant une étape de mesure de l'intensité du champ magnétique local en projection sur le premier axe, et une deuxième étape de traitement au cours de laquelle l'unité électronique de traitement calcule la position angulaire du projecteur à partir de la valeur du signal électrique de mesure.

Un tel procédé est particulièrement adapté pour mesurer ou déterminer la position angulaire instantanée d'un projecteur rotatif de véhicule automobile.

Certains véhicules automobiles sont en effet équipés de projecteurs avant qui sont montés rotatifs autour d'un axe vertical. Un tel projecteur permet par exemple, lorsqu'un véhicule aborde un virage, d'éclairer le tronçon de chaussée qui est situé dans la courbure du virage.

L'invention est aussi applicable aux projecteurs qui sont montés rotatifs autour d'un axe transversal de manière à corriger l'assiette du projecteur en fonction des irrégularités de la route.

Les projecteurs existants comportent souvent des actionneurs pas à pas ou des moteurs pas à pas. A chaque mise sous tension de l'actionneur, une phase d'initialisation, préalable à l'emploi de l'actionneur, est nécessaire afin de le calibrer. Lors de cette phase d'initialisation, le projecteur est amené dans une position angulaire neutre. Cette position angulaire neutre correspond à une orientation du projecteur lorsque le véhicule automobile roule en ligne droite et/ou à vitesse constante.

L'actionneur dispose généralement de butées de fin de course. Lors des phases d'initialisations habituelles, l'actionneur est amené contre ces butées. L'actionneur se déploie ainsi sur toute sa course, jusqu'à une des butées. Cette position en butée est alors prise comme position angulaire de référence afin de ramener le projecteur dans sa position angulaire neutre, par exemple en comptant un nombre de pas prédéterminé. La position angulaire de référence correspond donc à l'une des positions angulaires extrêmes du projecteur.

Cependant, parcourir l'ensemble de la course de l'actionneur pas à pas pour obtenir la position angulaire de référence du projecteur induit un mouvement intempestif du projecteur. Ce mouvement intempestif du projecteur peut provoquer une gêne ou un éblouissement d'un automobiliste roulant en sens inverse. En effet, l'automobiliste qui croise un véhicule dont le projecteur est en phase d'initialisation peut être ébloui par ce projecteur car la position angulaire de référence correspond à une position angulaire extrême qui est susceptible d'éclairer la voie sur laquelle l'autre automobiliste roule.

Par ailleurs, le mouvement intempestif du projecteur nuit systématiquement à la disponibilité du projecteur. En effet, parcourir l'ensemble de la course de l'actionneur nécessite une durée non négligeable, par exemple trois secondes.

On connaît aussi des dispositif de mesure qui comportent des capteurs appelés capteurs de copie ou de recopie. Ces capteurs émettent un signal électrique de mesure dont la valeur est représentative de la position du projecteur sur une plage intermédiaire de l'intervalle de débattement du projecteur.

Ainsi, sur cette plage intermédiaire, une valeur du signal émis par les capteurs est associée à chaque position angulaire du projecteur autour de son axe de rotation. On peut ainsi déterminer précisément pour chaque valeur produite la position angulaire instantanée exacte du projecteur sur la plage intermédiaire de positions angulaires.

Ce type de dispositif de mesure comporte par exemple un capteur à effet Hall fixe qui mesure l'intensité du champ magnétique émis par un aimant qui est monté pivotant de manière solidaire avec le projecteur.

Cependant, un tel capteur de recopie est très onéreux et complexe à fabriquer et à calibrer.

De plus, la sensibilité ce type de capteur n'est pas suffisante pour déterminer de manière précise la position angulaire instantanée du projecteur dans des plages d'extrémité de l'intervalle de débattement du projecteur.

En outre, lorsque ce type de dispositif de mesure comporte un capteur à effet Hall, les mesures effectuées par le capteur sont susceptibles d'être influencées par des contraintes extérieures telles que la température ou les vibrations.

Un procédé selon l'état de la technique est décrit dans le document EP1481846. Pour résoudre ces problèmes, l'invention propose un procédé tel que décrit dans les revendications.

Selon d'autres caractéristiques de l'invention :

- le deuxième axe de mesure s'étend dans un plan orthogonal à l'axe de pivotement de l'élément ferromagnétique par rapport aux moyens de mesure ;
- le deuxième axe de mesure s'étend dans un plan parallèle à l'axe de pivotement de l'élément ferromagnétique par rapport aux moyens de mesure ;
- lors de la première étape de mesure, l'intensité du champ magnétique local est mesurée en projection sur un troisième axe de mesure qui est orthogonal au premier et au deuxième axes de mesure par des troisièmes moyens de mesure, et en ce que lors de l'étape de traitement, l'unité électronique de traitement calcule l'angle du champ magnétique local par rapport au premier axe de mesure dans le plan comportant le premier et le troisième axes de mesure ;
- lors de la deuxième étape de traitement, les valeurs des signaux de mesures sont pondérées par des coefficients de correction de manière à ce que la valeur calculée par l'unité électronique de traitement soit linéairement proportionnelle à la position angulaire du projecteur dans tout l'intervalle de débattement ;
- lors de la deuxième étape de traitement, les valeurs calculées par l'unité électronique de traitement sont pondérées par des coefficients de correction de manière à ce que la valeur calculée par l'unité électronique de traitement soit linéairement proportionnelle à la position angulaire du projecteur dans tout l'intervalle de débattement.

L'invention propose aussi un dispositif de mesure pour la mise en oeuvre du procédé selon l'invention, caractérisé en ce qu'il comporte au moins deux capteurs à effet Hall qui sont susceptibles de mesurer l'intensité du champ magnétique local "B" en projection sur des axes de mesure sensiblement orthogonaux entre eux et un élément ferromagnétique.

Selon d'autres caractéristiques du dispositif :

- les capteurs à effet Hall sont agencés à proximité l'un de l'autre ;
- les capteurs à effet Hall sont incorporés dans un même élément électronique ;
- l'élément ferromagnétique est agencé de manière que chaque position angulaire du projecteur soit associée à une seule et unique direction du champ magnétique local ;
- l'élément ferromagnétique est décalé radialement par rapport à l'axe de pivotement entre les deux positions angulaires extrêmes correspondant respectivement aux positions angulaires extrêmes du projecteur.

D'autres caractéristiques et avantages de l'invention apparaîtront au cours de la lecture de la description détaillée qui suit pour la compréhension de laquelle on se reportera aux dessins annexés parmi lesquels :

- la figure 1 est une vue en perspective qui représente schématiquement un projecteur rotatif équipé d'un dispositif de mesure de la position angulaire selon l'invention comportant au moins deux capteurs à effet Hall et un élément ferromagnétique ;
- la figure 2 est une vue de dessus de la figure 1 qui représente le projecteur dans ses deux positions angulaires extrêmes ;
- la figure 3 est un schéma qui représente le champ magnétique au niveau des capteurs à effet Hall ;
- la figure 4 est un graphique qui représente la valeur des signaux électriques émis par les capteurs à effet Hall en fonction de la position angulaire du projecteur ;
- la figure 5 est un graphique qui représente le signal électrique résultant du calcul effectué par l'unité électronique de traitement.

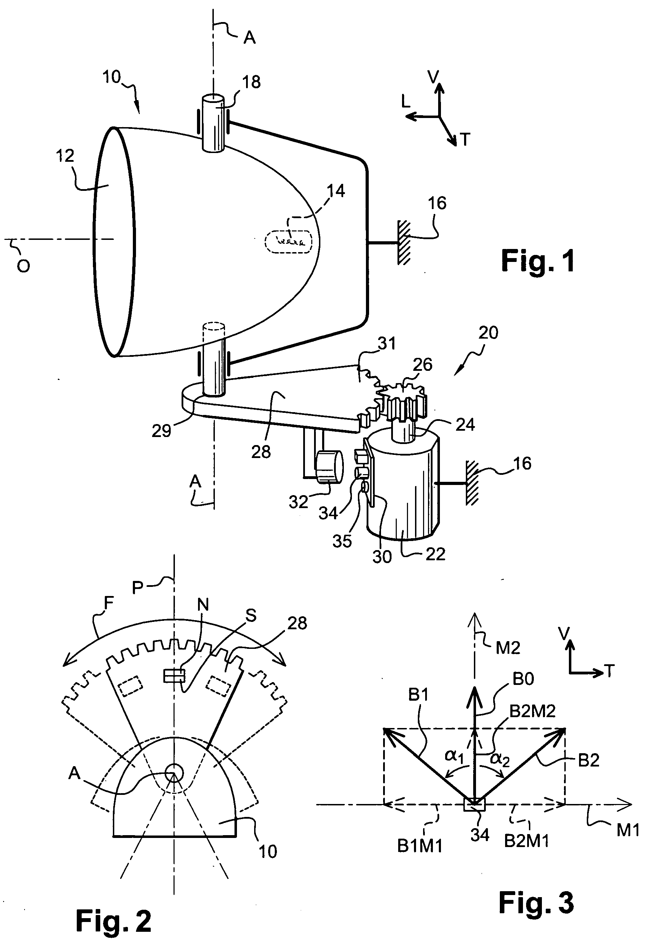

Pour la suite de la description, on adoptera à titre non limitatif une orientation longitudinale, verticale et transversale qui est fixe par rapport à la caisse du véhicule automobile et qui est indiquée par le trièdre "L, V,T" de la figure 1.

Par la suite, des éléments identiques, analogues ou similaires seront désignés par des mêmes numéros de référence.

On a représenté à la figure 1 un projecteur 10 de véhicule automobile qui comporte ici un réflecteur 12 à l'intérieur duquel est montée une lampe 14. Le projecteur 10 est susceptible d'émettre un faisceau lumineux selon un axe optique "O" d'orientation globalement longitudinale.

Le projecteur 10 est monté à rotation autour d'un axe vertical "A" par rapport à la caisse 16 du véhicule automobile. A cet effet, le projecteur 10 comporte deux tourillons 18 inférieur et supérieur d'axe "A".

Le projecteur 10 est ainsi susceptible d'être orienté selon plusieurs positions angulaires autour de l'axe "A" dans un intervalle de débattement qui est délimité par deux positions angulaires extrêmes. Pour la suite de la description, on définit une position angulaire neutre qui correspond à la position angulaire que le projecteur 10 occupe lorsqu'il éclaire la route selon l'axe longitudinal "L" du véhicule. La position angulaire neutre occupe une position médiane dans l'intervalle de débattement. Ainsi, l'axe optique "O" du projecteur 10 est susceptible de pivoter de part et d'autre de l'axe longitudinal "L" du véhicule automobile.

Le projecteur 10 est entraîné en rotation par un dispositif d'entraînement 20 qui comporte ici un moteur électrique 22, par exemple un moteur pas à pas, qui comporte un arbre vertical rotatif 24. Le moteur 22 est monté fixe par rapport à la caisse du véhicule automobile 16. Un pignon 26 est agencé à une extrémité supérieure libre de l'arbre 24.

Le dispositif d'entraînement 20 comporte aussi un secteur circulaire denté 28 qui s'étend dans un plan horizontal en éventail depuis un sommet 29 jusqu'à un arc périphérique denté 31, le sommet 29 formant le centre de l'arc périphérique 31.

Le sommet 29 du secteur denté 28 est monté à rotation autour de l'axe "A" de manière que le secteur denté 28 soit solidaire en rotation avec le projecteur 10. Les dents 31 du secteur denté 28 sont engrenées avec les dents du pignon 26 de manière que le moteur 22 soit susceptible d'entraîner le projecteur 10 en rotation par l'intermédiaire du secteur denté 28.

Le dispositif d'entraînement 20 comporte aussi une carte à circuit imprimé 30 qui s'étend dans un plan vertical transversal et qui est ici fixée au moteur 22.

Selon les enseignements de l'invention, le secteur denté 28 porte un élément ferromagnétique tel qu'un aimant 32. L'aimant 32 a ici une forme cylindrique d'axe "P". Comme représenté à la figure 2, l'aimant 32 comporte un pôle sud "S" et un pôle nord "N" qui sont chacun agencé à un tronçon d'extrémité axial de l'aimant cylindrique 32.

L'aimant 32 est ici portée par le secteur denté 28 de manière que son axe "P" forme la médiane du secteur denté 28. L'axe "P" est ainsi orthogonal à l'axe de rotation "A" et sécant avec l'axe de rotation "A". De manière non limitative, l'aimant 32 est décalé radialement par rapport à l'axe "A". L'aimant 32 est ainsi monté à rotation autour de l'axe "A" de manière solidaire avec le projecteur 10.

L'aimant 32 émet un champ magnétique "B" axisymétrique par rapport à l'axe "P" de l'aimant 32. Un champ magnétique local "B" est défini en tout point de l'espace par un vecteur caractérisé par sa direction et par son intensité.

Le dispositif d'entraînement 20 comporte aussi au moins deux capteurs 34A, 34B à effet Hall qui sont agencés sur la carte à circuit imprimé 30. Les capteurs à effet Hall 34 sont donc fixes par rapport à la caisse du véhicule automobile 16.

Chaque capteur à effet Hall 34 est apte à mesurer l'intensité du champ magnétique local "B", c'est-à-dire au point de l'espace sur lequel le capteur à effet Hall 34 est agencé, en projection sur un axe de mesure "M" déterminé qui est orienté vers une direction déterminée. Plus particulièrement, chaque capteur à effet Hall 34 émet un signal électrique de mesure "Sm" dont la valeur est représentative de l'intensité mesurée du champ magnétique local "B" en projection sur l'axe de mesure "M". La valeur du signal électrique émis par le capteur à effet Hall 34 peut être négative ou positive selon l'orientation de l'axe de mesure "M".

Les capteurs 34 sont reliés électriquement avec une unité électronique de traitement 35 qui est ici agencée au moins en partie sur la carte à circuit imprimé 30. L'unité électronique de traitement 35 est susceptible d'effectuer des opérations à partir des signaux électriques de mesure "S" émis par les capteurs 34 de manière à déterminer la position angulaire instantanée du projecteur 10.

Les capteurs à effet Hall sont ici agencés de manière à être en vis-à-vis de l'aimant 32 lorsque le projecteur 10 est dans sa position angulaire neutre, c'est-à-dire que les capteurs à effet Hall 34 sont alors alignés avec l'axe "P" de l'aimant 32. Dans cette position angulaire neutre, l'axe "P" de l'aimant 32 est, ici et de manière non limitative, orienté longitudinalement.

Les capteurs à effet Hall 34 sont incorporés dans un même élément électronique. Ainsi les deux capteurs 34 mesurent l'intensité du champ magnétique local "B" en un même point de l'espace.

Pour la suite de la description, le terme champ magnétique local "B" se rapportera au champ magnétique au point de l'espace auquel les capteurs 34A, 34B sont agencés.

Selon une variante non représentée de l'invention, chaque capteur à effet Hall 34A, 34B est incorporé dans un élément électronique distinct. Les deux capteurs à effet Hall 34A, 34B sont alors agencés au voisinage l'un de l'autre de manière à mesurer le champ magnétique local "B" approximativement au même point de l'espace.

Le premier capteur à effet Hall 34A est agencé de manière à mesurer l'intensité du champ magnétique local "B" en projection sur un premier axe de mesure "M1" qui est ici d'orientation transversale comme représenté à la figure 3. Le premier axe de mesure "M1" est orienté de gauche à droite en référence à la figure 3.

Le deuxième capteur à effet Hall 34B est agencé de manière à mesurer l'intensité du champ magnétique en projection sur un deuxième axe de mesure "M2" orthogonal au premier axe de mesure "M1" qui est ici d'orientation verticale comme représenté à la figure 3. Le deuxième axe de mesure "M2" est orienté de bas en haut en référence à la figure 3.

Selon une variante non représentée de l'invention, le deuxième capteur à effet Hall 34B est agencé de manière à mesurer l'intensité du champ magnétique local "B" en projection sur un deuxième axe de mesure d'orientation longitudinale.

Dans l'exemple représenté à la figure 3, on a représenté le champ magnétique local "B" en projection sur un plan vertical transversal pour plusieurs orientations angulaires du projecteur 10. Le champ magnétique local "B" est ainsi représenté par des vecteurs en traits pleins tandis que les projections du champ magnétique local "B" sur les axes de mesure "M1" et "M2 sont représentées par des vecteurs en traits interrompus.

Le vecteur "B0" correspond au champ magnétique local "B" dans un plan vertical transversal lorsque le projecteur 10 est dans sa position angulaire neutre. Le vecteur "B0" est ici orienté selon une direction verticale qui correspond au deuxième axe de mesure "M2".

En projection sur le premier axe de mesure "M1", le vecteur "B0" forme ainsi un point. Le premier capteur à effet Hall 34A mesure donc une intensité de 0 Tesla.

En projection sur le deuxième axe de mesure "M2", le vecteur "B0" est inchangé. Le deuxième capteur à effet Hall 34B mesure donc une intensité égale à l'intensité du vecteur "B0".

Le vecteur "B1" représenté à la figure 3 correspond au champ magnétique local "B" dans un plan vertical transversal lorsque le projecteur 10 est dans sa première position angulaire extrême. Le vecteur "B1" forme un angle "α1" avec le vecteur "B0".

En projection sur le premier axe "M1", le vecteur "B1" produit un vecteur "B1 M1" dont l'intensité est égale à l'intensité du vecteur "B1" multipliée par le sinus de l'angle "α1". Le premier axe de mesure "M1" étant orienté de gauche à droite, la valeur mesurée par le premier capteur 34A est négative.

En projection sur le deuxième axe "M2", le vecteur "B1" produit un vecteur "B1 M2" dont l'intensité est égale à l'intensité du vecteur "B1" multipliée par le cosinus de l'angle "α1". La valeur mesurée par le deuxième capteur 34B est ici positive.

Le vecteur "B2" représenté à la figure 3 correspond au champ magnétique local "B" dans un plan vertical transversal lorsque le projecteur 10 est dans sa deuxième position angulaire extrême. Le vecteur "B2" forme un angle "α2" avec le vecteur "B0".

En projection sur le premier axe "M1 ", le vecteur "B2" produit un vecteur "B2M1" dont l'intensité est égale à l'intensité du vecteur "B2" multipliée par le sinus de l'angle "α2". Le premier axe de mesure "M1" étant orienté de gauche à droite, la valeur mesurée par le premier capteur 34A est positive.

En projection sur le deuxième axe "M2", le vecteur "B2" produit un vecteur "B2M2" dont l'intensité est égale à l'intensité du vecteur "B2" multipliée par le cosinus de l'angle "α2". La valeur mesurée par le deuxième capteur 34B est ici positive.

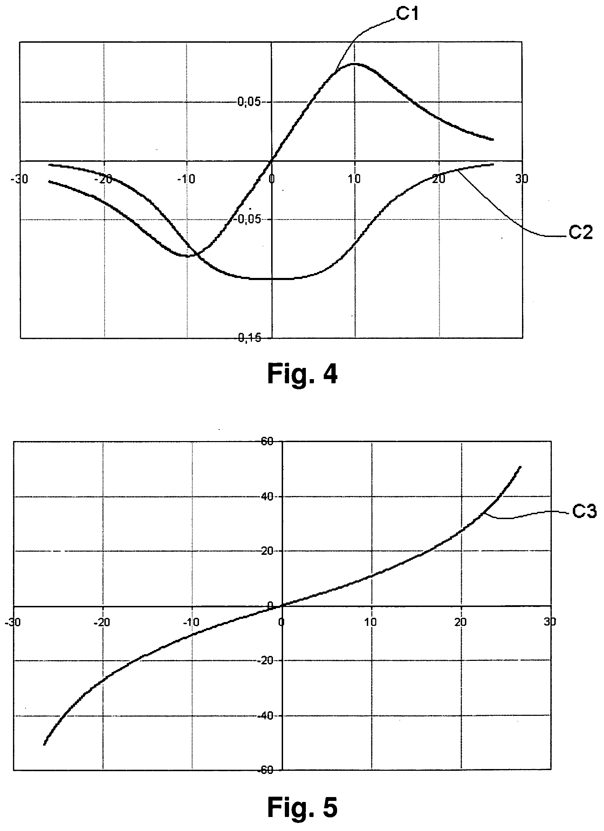

Le graphique représenté à la figure 4 comporte une première courbe "C1" et une deuxième courbe "C2". La première courbe "C1" représente la valeur de l'intensité mesurée par le premier capteur à effet, Hall 34A en fonction de la position angulaire du projecteur 10, tandis que la deuxième courbe "C2" représente la valeur de l'intensité mesurée par le deuxième capteur à effet Hall 34B en fonction de la position angulaire du projecteur 10.

Du fait de l'agencement de l'aimant 32 par rapport aux capteurs à effet Hall 34A, 34B, les deux courbes "C1, C2" sont symétriques par rapport à la position angulaire neutre du projecteur 10. On constate que la courbe "C1" a une forme de portion de sinusoïdale qui change de signe lorsque le projecteur 10 franchit sa position angulaire neutre.

Les tronçons d'extrémité de la première courbe "C1" correspondent à des plages de positions angulaires du projecteur 10 qui sont aux deux extrémités de l'intervalle de débattement. Or, il n'est pas possible de déterminer avec précision la position angulaire du projecteur 10 dans ces deux plages extrêmes car à une même valeur mesurée par le premier capteur 34A correspondent deux positions angulaires possibles pour le projecteur 10.

L'invention propose donc un procédé simple pour déterminer précisément la position angulaire du projecteur dans tout son intervalle de débattement en fonction de l'orientation du champ magnétique local "B" en projection sur un plan vertical transversal par rapport au deuxième axe de mesure "M2". Dans le cadre de l'invention, lorsque celle-ci est appliquée à un feu de virage dynamique (DBL), le débattement est de 20° de part et d'autre de la position neutre.

A cet effet, l'aimant 32 est agencé et conformé de telle manière que la direction du champ magnétique local "B" change constamment lors de la rotation du projecteur 10 et plus particulièrement, de manière qu'une seule et unique direction du champ magnétique local "B" soit associée à chaque position angulaire du projecteur 10.

Lors d'une première étape de mesure "E1", l'intensité du champ magnétique local "B" est mesurée par les deux capteurs à effet Hall 34A, 34B en projection selon les deux axes de mesure "M1, M2". Les capteurs 34A, 34B communiquent alors les signaux électriques de mesure "Sm1, Sm2" à l'unité électronique de traitement 35.

Puis lors d'une deuxième étape de traitement "E2", une valeur "Sr" représentative de l'angle du champ magnétique local "B" par rapport au deuxième axe de mesure "M2" dans le plan vertical transversal est calculée par l'unité électronique de traitement 35.

L'unité électronique de traitement 35 calcule tout d'abord le rapport de la valeur du premier signal de mesure "Sm1" sur la valeur du deuxième signal de mesure "Sm2". Puis en calculant par exemple la fonction arctangente du rapport ainsi obtenu, la valeur "Sr" obtenue est ici égale à l'angle du champ magnétique local "B" dans le plan vertical transversal par rapport au deuxième axe de mesure "M2". L'unité électronique de traitement 35 effectue donc le calcul suivant :

$$Sr = \arctan\left[\frac{Sm1}{Sm2}\right]$$

La fonction arctangente n'est qu'une des fonctions utilisables, et peut être remplacée par toute autre fonction mathématique compatible avec les capacités de calcul de l'unité électronique de traitement 35.

Comme on peut le voir à la figure 5, l'angle calculé est ici linéairement proportionnel à la position angulaire du projecteur 10 dans tout l'intervalle de débattement.

Selon une variante non représentée de l'invention, la valeur "Sr" calculée par l'unité électronique de traitement 35 lors de la deuxième étape de traitement "E2" est une approximation de l'angle réel du champ magnétique. Ainsi, la courbe C3 de la figure 5 est susceptible d'être obtenue en calculant simplement le rapport de la valeur du premier signal de mesure "Sm1" sur la valeur du deuxième signal de mesure "Sm2". Ce procédé de calcul peut notamment être adopté lorsque l'angle réel du champ magnétique local "B" ne varie pas linéairement par rapport à la position angulaire du projecteur 10.

Selon encore une variante de l'invention, l'angle du champ magnétique local "B" ne varie pas de manière linéaire par rapport à la position angulaire du projecteur 10. Il est alors possible de corriger la linéarité de la valeur "Sr" calculée par rapport à la position angulaire du projecteur 10 en pondérant les valeurs des signaux de mesure "Sm1, Sm2" avec des coefficients de correction "K1, K2". L'unité électronique de traitement 35 effectue alors le calcul suivant :

$$Sr = \arctan\left[\frac{(K1 \times Sm1)}{(K2 \times Sm2)}\right]$$

Les coefficients peuvent être des constantes. Ils peuvent également être des fonctions des signaux de mesure, de la forme $Ki = f(Smi)$, ou encore être issus d'une table de correction.

A la fin de la deuxième étape de traitement "E2", lorsque la valeur représentative de l'angle du champ magnétique local "B" a été calculée, elle est par exemple comparée par l'unité électronique de traitement 35 avec une cartographie préétablie afin d'en déduire la position angulaire instantanée du projecteur 10.

Selon une autre variante non représentée de l'invention, le dispositif de mesure de la position angulaire du projecteur 10 comporte un troisième capteur à effet Hall 34C qui est susceptible de mesurer la champ magnétique local "B" en projection sur un troisième axe de mesure "M3" qui est orthogonal au premier et au deuxième axes de mesure "M1, M2". Par exemple, le premier axe de mesure "M1" est orienté transversalement, le deuxième axe de mesure "M2" est orienté verticalement et le troisième axe de mesure "M3" est orienté longitudinalement.

Ainsi, lors de l'étape de mesure "E1 ", l'unité électronique de traitement 35 reçoit trois signaux de mesure "M1, M2, M3".

Lors de la deuxième étape de traitement, l'unité électronique de traitement 35 est susceptible de calculer l'orientation du champ magnétique local "B" en trois dimensions.

Par exemple, l'unité électronique de traitement 35 calcule une première valeur "Sr1" représentative de l'angle que fait le champ magnétique local "B" en projection sur un premier plan vertical transversal par rapport au deuxième axe de mesure "M2", comme décrit précédemment. L'unité électronique de traitement 35 calcule aussi une deuxième valeur "Sr2" représentative de l'angle que fait le champ magnétique local "B" en projection sur un deuxième plan longitudinal transversal par rapport au troisième axe de mesure "M3", comme décrit précédemment.

En combinant ces deux valeurs calculées "Sr1, Sr2", il est ainsi possible de déterminer la direction du champ magnétique local "B" dans l'espace en trois dimensions et non plus dans un plan en deux dimensions. Cette variante permet d'obtenir une mesure encore plus précise de la position angulaire du projecteur 10 dans tout son intervalle de débattement en combinant les deux valeurs représentatives.

Le dispositif d'entraînement 20 qui est décrit ici, est donné à titre d'exemple non limitatif. L'invention est aussi applicable à d'autres types de dispositifs d'entraînement. On comprendra qu'il suffit que le déplacement angulaire de l'aimant 32 par rapport aux capteurs 34 soit proportionnel au déplacement angulaire du projecteur 10.

De même, l'invention n'est pas limitée à un aimant 32 qui est monté rotatif autour du même axe que le projecteur 10.

Par ailleurs, l'aimant 32 n'est pas limité à la forme cylindrique qui est décrite ici. Il suffit que l'aimant 32 soit conformé de manière à émettre un champ magnétique dont la direction varie de manière continue avec la rotation du projecteur en un point déterminé de l'espace, et d'agencer les capteurs à effet Hall audit point déterminé de manière à appliquer le procédé selon l'invention. Plus particulièrement, audit point déterminé, chaque position angulaire du projecteur 10 est associée à une seule et unique orientation angulaire du champ magnétique local "B", et chaque orientation angulaire du champ magnétique local "B" est associée à une seule et unique position angulaire du projecteur 10.

En variante non représentée de l'invention, l'aimant 32 est monté fixe par rapport à la caisse du véhicule automobile tandis que les capteurs à effet Hall 34 sont montés pivotants.

Grâce à un tel procédé, il est possible de mesurer la position angulaire du projecteur dans tout son intervalle de débattement.

De plus, le calcul de l'angle du champ magnétique local "B" est réalisé en faisant le rapport de deux mesures Sm1 et Sm2, ou de leurs valeurs corrigées, obtenues par deux capteurs similaires agencés à proximité l'un de l'autre. Or, les mesures de ces capteurs sont susceptibles d'être influencées de la même manière par les conditions extérieures telles que les variations de la température et/ou les variations de distance entre l'aimant et les capteurs et/ou les vibrations. En réalisant le calcul de l'angle, les erreurs de mesure sont annulées par l'opération de division.

**Revendications**

1. Procédé de détermination de la position angulaire instantanée d'un projecteur (10), notamment de véhicule automobile, qui est monté pivotant autour d'un axe de rotation (A) dans un intervalle prédéterminé de débattement délimité par deux positions angulaires extrêmes, au moyen d'un dispositif de mesure qui comporte :

- au moins un aimant (32) qui émet un champ magnétique (B) qui est défini en tout point de l'espace par une direction et une intensité,
- au moins des premiers moyens de mesure (34A) de l'intensité d'un champ magnétique local (B) en projection sur un premier axe qui émettent un premier signal électrique de mesure (Sm1), l'aimant (32) étant monté pivotant par rapport aux premiers moyens de mesure (34A) autour d'un axe de pivotement (A) entre deux positions angulaires extrêmes correspondant respectivement aux positions angulaires extrêmes du projecteur ;
- une unité électronique de traitement (35) ;
- le procédé comportant une étape de mesure de l'intensité du champ magnétique local (B) en projection sur le premier axe, et une deuxième étape de traitement au cours de laquelle l'unité électronique de traitement (35) calcule la position angulaire du projecteur à partir de la valeur du signal électrique de mesure,

**caractérisé en ce que** lors de l'étape de mesure, l'intensité du champ magnétique local (B) est mesurée en projection sur au moins un deuxième axe de mesure (M2) orthogonal au premier axe de mesure (M1) par des deuxièmes moyens de mesure (34B) qui émettent un deuxième signal électrique de mesure (Sm2), et **en ce que** lors de la deuxième étape de traitement, l'unité électronique de traitement (35) calcule une valeur représentative de l'angle du champ magnétique local (B) par rapport au premier axe de mesure (M1) en projection sur le plan défini par les deux axes de mesures (M1, M2), et **en ce que** l'aimant est décalé radialement par rapport à l'axe de pivotement (A).

2. Procédé selon l'une quelconque des revendications précédentes, **caractérisé en ce que** le deuxième axe de mesure (M2) s'étend dans un plan orthogonal à l'axe de pivotement (A) de l'aimant (32) par rapport aux moyens de mesure (34),

3. Procédé selon la revendication 1, **caractérisé en ce que** le deuxième axe de mesure (M2) s'étend dans un plan parallèle à l'axe de pivotement (A) de l'aimant (32) par rapport aux moyens de mesure (34).

4. Procédé selon l'une quelconque des revendications précédentes, **caractérisé en ce que**, lors de la première étape de mesure (E1), l'intensité du champ magnétique local (B) est mesurée en projection sur un troisième axe de mesure (M3) qui est orthogonal au premier (M1) et au deuxième (M2) axes de mesure par des troisièmes moyens de mesure (34C), et **en ce que** lors de l'étape de traitement, l'unité électronique de traitement (35) calcule l'angle du champ magnétique local (B) par rapport au premier axe de mesure dans le plan comportant le premier et le troisième axes de mesure.

5. Procédé selon l'une quelconque des revendications précédentes, **caractérisé en ce que** lors de la deuxième étape de traitement, les valeurs des signaux de mesures (Sm1, Sm2) sont pondérées par des coefficients de correction (K1, K2) de manière que la valeur calculée par l'unité électronique de traitement (35) soit linéairement proportionnelle à la position angulaire du projecteur dans tous l'intervalle de débattement.

6. Procédé selon l'une quelconque des revendications précédentes, **caractérisé en ce que**, lors de la deuxième étape de traitement, les valeurs calculées par l'unité électronique de traitement (35) sont pondérées par des coefficients de correction de manière que la valeur calculée par l'unité électronique de traitement (35) soit linéairement proportionnelle à la position angulaire du projecteur (10) dans tout l'intervalle de débattement.

7. Dispositif de mesure pour la mise en oeuvre du procédé selon l'une quelconque des revendications précédentes, **caractérisé en ce qu'**il comporte au moins deux capteurs à effet Hall (34A, 34B, 34C) qui sont susceptibles de mesurer l'intensité du champ magnétique local "B" en projection sur des axes de mesure (M1, M2, M3) sensiblement orthogonaux entre eux et un aimant (32) et **en ce que** l'aimant est décalé radialement par rapport à l'axe de pivotement (A).

8. Dispositif de mesure selon la revendication précédente, **caractérisé en ce que** les capteurs à effet Hall (34A, 34B, 34C) sont agencés à proximité l'un de l'autre.

9. Dispositif de mesure selon la revendication précédente, **caractérisé en ce que** les capteurs à effet Hall (34A, 34B, 34C) sont incorporés dans un même élément électronique.

10. Dispositif de mesure selon la revendication précédente, **caractérisé en ce que** l'aimant (32) est agencé de manière que chaque position angulaire du projecteur (10) soit associée à une seule et unique direction du champ magnétique local (B).

11. Projecteur selon l'une quelconque des revendications précédentes, **caractérisé en ce qu'**il comprend un dispositif de mesure selon l'une quelconque des revendications 7 à 10.

**Patentansprüche**

1. Verfahren zum Bestimmen der momentanen Winkelstellung eines Scheinwerfers (10) insbesondere eines Kraftfahrzeugs, der innerhalb eines vorbestimmten, von zwei Winkelendstellungen begrenzten Schwenkbereichs um eine Drehachse (A) schwenkbar gelagert ist, mittels einer Messvorrichtung, die umfasst:

   - wenigstens einen Magneten (32), der ein Magnetfeld (B) erzeugt, das in jedem Punkt des Raums durch eine Richtung und eine Stärke definiert ist;
   - wenigstens erste Mittel (34A) zum Messen der Stärke eines lokalen Magnetfeldes (B) durch Projektion auf eine erste Achse, die ein erstes elektrisches Messsignal (Sm1) erzeugen, wobei der Magnet (32) bezüglich der ersten Messmittel (34A) zwischen zwei Winkelendstellungen schwenkbar um eine Drehachse (A) gelagert ist, die jeweils den Winkelendstellungen des Scheinwerfers entsprechen;
   - eine elektronische Verarbeitungseinheit (35);

   wobei das Verfahren einen Schritt zum Messen der Stärke des lokalen Magnetfeldes (B) durch Projektion auf die erste Achse und einen zweiten Verarbeitungsschritt umfasst, in dessen Verlauf die elektronische Verarbeitungseinheit (35) die Winkelstellung des Scheinwerfers anhand des Wertes des elektrischen Messsignals berechnet, **dadurch gekennzeichnet, dass** während des Messschritts die Stärke des lokalen Magnetfeldes (B) durch Projektion auf wenigstens eine zweite, zur ersten Messachse (M1) orthogonale Messachse (M2) durch zweite Messmittel (34B) gemessen wird, die ein zweites elektrisches Messsignal (Sm2) erzeugen, und dass während des zweiten Verarbeitungsschritts die elektronische Verarbeitungseinheit (35) einen für den Winkel des lokalen Magnetfeldes (B) bezüglich der ersten Messachse (M1) repräsentativen Wert durch Projektion auf die von den beiden Messachsen (M1, M2) definierte Ebene berechnet, und dass der Magnet zur Drehachse (A) radial versetzt ist.

2. Verfahren nach dem vorhergehende Anspruch, **dadurch gekennzeichnet, dass** die zweite Messachse (M2) bezüglich der Messmittel (34) in einer zur Drehachse (A) des Magneten (32) orthogonalen Ebene verläuft.

3. Verfahren nach Anspruch 1, **dadurch gekennzeichnet, dass** die zweite Messachse (M2) bezüglich der Messmittel (34) in einer zur Drehachse (A) des Magneten (32) parallelen Ebene verläuft.

4. Verfahren nach einem der vorhergehenden Ansprüche, **dadurch gekennzeichnet, dass** während des ersten Messschritts (E1) die Stärke des lokalen Magnetfeldes (B) durch Projektion auf eine dritte Messachse (M3), die zu der ersten (M1) und der zweiten (M2) Messachse orthogonal ist, durch dritte Messmittel (34C) gemessen wird, und dass während des Verarbeitungsschritts die elektronische Verarbeitungseinheit (35) den Winkel des lokalen Magnetfeldes (B) bezüglich der ersten Messachse in der Ebene berechnet, die die erste und dritte Messachse umfasst.

5. Verfahren nach einem der vorhergehenden Ansprüche, **dadurch gekennzeichnet, dass** während des zweiten Verarbeitungsschritts die Werte der Messsignale (Sm1, Sm2) durch Korrekturkoeffizienten (K1, K2) solchermaßen gewichtet werden, dass der von der elektronischen Verarbeitungseinheit (35) berechnete Wert linear proportional zur Winkelstellung des Scheinwerfers innerhalb des gesamten Schwenkbereichs ist.

6. Verfahren nach einem der vorhergehenden Ansprüche, **dadurch gekennzeichnet, dass** während des zweiten Verarbeitungsschritts die von der elektronischen Verarbeitungseinheit (35) berechneten Werte durch Korrekturkoeffizienten solchermaßen gewichtet werden, dass der von der elektronischen Verarbeitungseinheit (35) berechnete Wert linear proportional zur Winkelstellung des Scheinwerfers (10) innerhalb des gesamten Schwenkbereichs ist.

7. Messvorrichtung zur Durchführung des Verfahrens nach einem der vorhergehenden Ansprüche, **dadurch gekennzeichnet, dass** sie wenigstens zwei Hallsensoren (34A, 34B, 34C), die die Stärke des lokalen Magnetfeldes (B) durch Projektion auf im Wesentlichen zueinander orthogonale Messachsen (M1, M2, M3) zu messen vermögen, und einen Magneten (32) umfasst, und dass der Magnet zur Drehachse (A) radial versetzt ist.

8. Messvorrichtung nach dem vorhergehende Anspruch, **dadurch gekennzeichnet, dass** die Hallsensoren (34A, 34B, 34C) nahe beieinander angeordnet sind.

9. Messvorrichtung nach dem vorhergehende Anspruch, **dadurch gekennzeichnet, dass** die Hallsensoren (34A, 34B, 34C) in ein und demselben elektronischen Bauelement integriert sind.

10. Messvorrichtung nach dem vorhergehende Anspruch,
**dadurch gekennzeichnet, dass** der Magnet (32) solchermaßen angeordnet ist, dass jede Winkelstellung des Scheinwerfers (10) nur einer einzigen Richtung des lokalen Magnetfeldes (B) zugeordnet ist.

11. Scheinwerfer nach einem der vorhergehenden Ansprüche,
**dadurch gekennzeichnet, dass** er eine Messvorrichtung nach einem der Ansprüche 7 bis 10 umfasst.


## Claims

1. Method for determining the instantaneous angular position of a headlight (10), in particular of a motor vehicle, that is mounted so as to pivot about a rotation axis (A) in a predetermined range of movement delimited by two extreme angular positions, by means of a measuring device that comprises:

    - at least one magnet (32) that emits a magnetic field (B) that is defined at any point in space by a direction and an intensity,
    - at least first means (34A) for measuring the intensity of a local magnetic field (B) projected on a first axis, which emit a first electrical measurement signal (Sm1), the magnet (32) being mounted so as to pivot with respect to the first measuring means (34A) about a pivot axis (A) between two extreme angular positions corresponding respectively to the extreme angular positions of the headlight;
    - an electronic processing unit (35);
    - the method comprising a step of measuring the intensity of the local magnetic field (B) projected on the first axis, and a second processing step during which the electronic processing unit (35) computes the angular position of the headlight from the value of the electrical measurement signal,

**characterised in that**, during the measurement step, the intensity of the local magnetic field (B) is measured in projection on at least a second measurement axis (M2) orthogonal to the first measurement axis (M1) by second measuring means (34B) that emit a second electrical measurement signal (Sm2), and **in that**, during the second processing step, the electronic processing unit (35) computes a value representing the angle of the local magnetic field (B) with respect to the first measurement axis (M1) projected on the plane defined by the two measurement axes (M1, M2), and **in that** the magnet is offset radially with respect to the pivot axis (A).

2. Method according to any one of the preceding claims, **characterised in that** the second measurement axis (M2) extends in a plane orthogonal to the pivot axis of the magnet (32) with respect to the measuring means (34).

3. Method according to claim 1, **characterised in that** the second measurement axis (M2) extends in a plane parallel to the pivot axis (A) of the magnet (32) with respect to the measuring means (34).

4. Method according to any one of the preceding claims, **characterised in that**, during the first measurement step (E1), the intensity of the local magnetic field (B) is measured in projection on a third measurement axis (M3) that is orthogonal to the first (M1) and second (M2) measurement axes by third measuring means (34C), and **in that**, during the processing step, the electronic processing unit (35) computes the angle of the local magnetic field (B) with respect to the first measurement axis in the plane comprising the first and third measurement axes.

5. Method according to any one of the preceding claims, **characterised in that**, during the second processing step, the values of the measurement signals (Sm1, Sm2) are weighted by correction coefficients (K1, K2) so that the value computed by the electronic processing unit (35) is linearly proportional to the angular position of the headlight throughout the range of movement.

6. Method according to any one of the preceding claims, **characterised in that**, during the second processing step, the values computed by the electronic processing unit (35) are weighted by correction coefficients so that the value computed by the electronic processing unit (35) is linearly proportional to the angular position of the headlight (10) throughout the range of movement.

7. Measuring device for implementing the method according to any one of the preceding claims, **characterised in that** it comprises at least two Hall effect sensors (34A, 24B, 34C) that are able to measure the intensity of the local magnetic field "B" projected on measurement axes (M1, M2, M3) substantially orthogonal to one another and a magnet (32) and **in that** the magnet is offset radially with respect to the pivot axis (A).

8. Measuring device according to the preceding claim, **characterised in that** the Hall effect sensors (34A, 34B, 34C) are arranged close to one another.

9. Measuring device according to the preceding claim, **characterised in that** the Hall effect sensors (34A, 34B, 34C) are incorporated in the same electronic element.

10. Measuring device according to the preceding claim, **characterised in that** the magnet (32) is arranged so that each angular position of the headlight (10) is associated with single direction of the local magnetic field (B).

11. Headlight according to any one of the preceding claims, **characterised in that** it comprises a measuring device according to any one of claims 7 to 10.

Fig. 1

Fig. 2

Fig. 3

**Fig. 4**

**Fig. 5**

**EP 1 845 342 B1**

## RÉFÉRENCES CITÉES DANS LA DESCRIPTION

**Documents brevets cités dans la description**

- EP 1481846 A